# EUROPÄISCHE PATENTANMELDUNG

(11) **EP 1 075 985 A2**
(43) Veröffentlichungstag der Anmeldung: **14.02.2001**
(21) Anmeldenummer: 00116680.0
(22) Anmeldetag: 02.08.2000
(51) Int. Cl.: B60N 3/04

(54) **Fussbodenverkleidung für den Fahrgastraum von Kraftfahrzeugen**

(30) Priorität: 09.08.1999 DE 19936770
(71) Anmelder: MAGNA NÄHER GmbH, 71706 Markgröningen (DE)
(72) Erfinder: Kobiela, Andrea, D-70563 Stuttgart (DE)
(74) Vertreter: Patentanwälte Ruff, Beier und Partner

(57) **Zusammenfassung**

Die Erfindung betrifft eine Fußbodenverkleidung (16) für den Fahrgastraum von Kraftfahrzeugen mit mindestens einem der Form der Innenseite des Fahrzeugbodens sowie daran befestigten Teilen angepaßten volumenbildenden Formkörper (17) aus elastischem Weichschaum und einem die Oberseite des Formkörpers abdeckenden textilen Dekor (18), wobei mit dem Formkörper (17) aus Weichschaum mindestens ein mindestens einen Kanalabschnitt (4, 8) aufweisender Einleger (1) verbunden ist. Die Erfindung betrifft auch einen Einleger für die Fußbodenverkleidung.

## Beschreibung

Die Erfindung betrifft eine Fußbodenverkleidung für den Fahrgastraum von Kraftfahrzeugen mit mindestens einem der Form der Innenseite des Fahrzeugbodens sowie daran befestigten Teilen angepaßten volumenbildenden Formkörper aus elastischem Weichschaum und einem die Oberseite des Formkörpers abdeckenden textilen Dekor.

Fußbodenverkleidungen dieser Art bilden ein sogenanntes Feder-Masse System, bei dem der Weichschaum eine Federwirkung ausübt. Das textile Dekor wird in der Regel von einem Nadelfilz oder Noppenfilz gebildet und wirkt als Masse. Durch Einlagerung von Schwerschichten, die mineralische Stoffe enthalten, kann die Masse noch erhöht werden. Derartige Feder-Massen Systeme bewirken eine gute Schalldämmung im Fahrgastraum von Kraftfahrzeugen. In den Weichschaum können noch Formkörper aus Polystyrol eingebettet sein, um der Fußbodenverkleidung an gewünschten Stellen Steifigkeit zu verleihen. Ferner üben derartige Polystyrolformkörper eine Crashfunktion aus, indem sie im Falle eines Unfalls bei der Stauchung Kräfte vernichten. Derartige Varianten können auch bei der Erfindung verwirklicht sein.

Durch Gewichts- und auch Raumeinsparung ist das der Fußbodenverkleidung zur Verfügung stehende Raumangebot verringert. Hinzu kommt, daß in vermehrtem Maße Steuergruppen im Fußbereich installiert werden und auch Leitungen dort verlegt werden, insbesondere Luftschächte von Heizungs-, Lüftungs- und Klimaanlagen. Dadurch wird die Schalldämmung durch das nicht mehr ausgewogene Feder-Masse System beeinträchtigt.

Der Erfindung liegt die Aufgabe zugrunde diesen Umständen Rechnung zu tragen, eine ausreichende Schalldämmung zu gewährleisten und die Montage im Fußbodenbereich von Kraftfahrzeugen zu vereinfachen.

Diese Ausgabe wird ausgehend von der oben beschriebenen Fußbodenverkleidung dadurch gelöst, daß mit dem Formkörper aus Weichschaum mindestens ein mindestens einen Kanalabschnitt aufweisender Einleger verbunden ist. Gemäß der Erfindung ist es vorgesehen, Teile, die bisher am Fußboden des Kraftfahrzeuges d.h. am Bodenblech befestigt werden, in die Fußbodenverkleidung zu integrieren. Dadurch ist es möglich, diese Teile in das Feder-Masse System einzubinden. Da die in den elastischen Weichschaum eingebetteten Kanalabschnitte durch den Weichschaum in der für die Montage richtigen Lage gehalten werden, wird die Montage erleichtert und auch die Teilezahl bei der Montage am Fließband verringert.

Der den Kanalabschnitt aufweisende Einleger wird vorzugsweise durch Anschäumen des Weichschaums mit der Fußbodenverkleidung verbunden, insbesondere in diese eingeschäumt. Der Weichschaum besteht in der Regel aus weich eingestellten Polyurethanschaum. Gewünschtenfalls sind auch Schäume aus anderen Materialien geeignet, sofern sie die erforderliche Elastizität besitzen. Mit besonderem Vorteil ist der Einleger vom Weichschaum mindestens an seiner Ober- und Unterseite umschäumt. Dadurch wird eine besonders günstige Schalldämmung erzielt.

Der mindestens eine Kanalabschnitt des Einlegers ist in der Regel ein solcher eines Lüftungskanals, wie er für Heizung, Lüftung und Klima vorgesehen ist. Ein Kanalabschnitt kann auch zur Aufnahme oder zur Abdeckung von Leitungen, insbesondere elektrischen Leitungen, ausgebildet und vorgesehen sein, worauf später noch eingegangen wird.

Der Einleger und insbesondere der Kanalabschnitt ist vorzugsweise steif ausgebildet. Er ist in der Lage, das Gewicht einer normalen Person auszuhalten. Insbesondere bei Lüftungs- und Klimaanlagen haben die Kanäle einen gekrümmten Verlauf und sind zum Teil recht kompliziert gestaltet. Insbesondere deshalb ist es bei einer bevorzugten Ausführungsform der Erfindung vorgesehen, daß der Kanalabschnitt von mindestens zwei aufeinander liegenden Kanalwandungsteilen gebildet wird, von denen mindestens einer ein kanalförmiges Profil aufweist. In der Regel besitzen beide Wandungsteile ein kanalförmiges Profil, das jedoch nicht spiegelbildlich zu sein braucht. Die Kanalwandungsteile sind mit besonderem Vorteil durch Tiefziehen oder Blasen geformt, wodurch sich in einfacher Weise komplizierte Formteile herstellen lassen. Die Kanalwandungsteile können entlang gemeinsamer, vorzugsweise flanschartiger Ränder und gegebenenfalls an weiteren einander berührenden Bezirken bleibend miteinander verbunden sein. Gerade die Ausbildung von flanschartigen Rändern läßt sich beim Blasen oder Tiefziehen in einfacher Weise herstellen. Durch solche Ränder wird eine hohe Steifigkeit erzielt. Ferner wird diese noch dadurch verbessert, daß beispielsweise an Verzweigungen oder Unterteilungen zusätzliche Verbindungsstellen geschaffen werden.

Beispielsweise bei Kanälen für elektrische Leitungen, ist es nicht erforderlich, daß die Verbindung zwischen Kanalwandungsteilen vollständig dicht ist. Die Verbindung zwischen den Wandungsteilen ist jedoch mindestens so dicht, daß beim Einschäumen der Kanalabschnitte in den Weichschaum kein Schaum in das Kanalinnere einzudringen vermag. Bei Lüftungskanälen ist die Verbindung zwischen den Kanalwandungsteilen in der Regel vollständig dicht, wobei die Kanalöffnungen selbstverständlich offen bleiben. Hier können Blindverschlüsse während des Einschäumens ein Eindringen des Schaums verhindern.

Bei Verwendung von thermoplastischen Materialien für die Kanalwandungsteile kann beim Tiefziehen oder Blasen unter gleichzeitiger Erwärmung der Wandungsteile auch eine Verschweißung der beiderseitigen Ränder der Kanalwandungsteile zur Verbindung vorgenommen werden. Bei Polypropylen, das für die Kanalabschnitte bevorzugt Anwendung findet, sind jedoch schon recht hohe Temperaturen erforderlich. Es ist deshalb bei einer Ausführungsform der Erfindung bevorzugt, die Kanalwandungsteile mit Hilfe eines Klebemittels, insbesondere eines thermoplastischen Klebemittels miteinander zu verbinden. Bevorzugt ist ein Klebemittel mit einer Schmelztemperatur unterhalb der Schmelztemperatur von Polypropylen. Hierzu stehen geeignete Schmelzkleber zur Verfügung. Mit besonderem Vorteil ist als Kleber eine Folie aus thermoplastischem Material, insbesondere aus Polyethylen vorgesehen. Mit einer solchen Folie können auch die Kanalinnenwandungen ausgekleidet bzw. beschichtet werden, so daß glatte Oberflächen erhalten werden, was bei der Verwendung von faserverstärkten Kunststoffen für die Wandungsteile besonders günstig ist. Sind zwei Wandungsteile aufeinander gelegt, dann werden vorzugsweise zwei Klebefolien verwendet, die zwischen den Wandungsteilen angeordnet sind. Bei der Herstellung des Kanalabschnittes erfolgt dies vorzugsweise in der Weise, daß ebene Platten verwendet werden unter Zwischenlage der Folien. Die Platten werden in vorerhitztem Zustand in Formen eingelegt und dann durch Einblasen von Luft zwischen die Folien in die Form des Kanalabschnittes bzw. des gesamten Einlegers gebracht, wobei die Folien entlang der gemeinsamen Ränder die Verbindung schaffen und sich gleichzeitig an die Innenflächen der Platten anlegen und diese überziehen.

Es ist auch möglich mehrere voneinander getrennte Kanalabschnitte auszubilden. So ist es möglich drei oder mehr Kanalwandungsteile vorzusehen, die miteinander verbunden sind, wobei vorzugsweise äußere Kanalwandungsteile kanalförmig profiliert sind bzw. beim Tiefziehen oder Blasen geformt werden und zwischengelegte Kanalwandungsteile Trennwände bilden. Diese können auch aus zwischengelegten Metallplatten bestehen.

Es wurde gefunden, daß Faserverbundfolien bzw. Laminate und insbesondere faserverstärkte Kunststoffe besonders geeignet für die Ausbildung der Einleger und der Kanalabschnitte sind. Dabei sind thermoplastische Kunststoffe von besonderem Vorteil, wenn die Teile aus vorgefertigten Platten unter Anwendung von Wärme geformt werden. Als Kunststoff eignet sich besonders Polypropylen wegen seiner Wärmestabilität, seiner mechanischen Stabilität und auch wegen seiner unproblematischen Entsorgungsmöglichkeit. Ein Laminat, insbesondere ein Bilaminat kann beispielsweise aus einer Polypropylenplatte bzw. Folie bestehen, die insbesondere auf einer Seite mit einem Fasermaterial, insbesondere einem Nadelfilz, beschichtet ist. Insbesondere bei Lüftungskanälen würde dann der Nadelfilz die äußere Seite bilden, wodurch einerseits eine Verbindung mit dem Weichschaum gewährleistet ist und andererseits glatte Innenflächen im Kanal vorhanden sind. Bei Kanalabschnitten für elektrische Leitungen ist auch ein Trilaminat von Vorteil, das eine mittlere Polypropylenfolie aufweist, die auf ihren beiden Seiten mit Nadelfilz beschichtet ist. Mechanisch und thermisch besonders günstig sind faserverstärkte Kunststoffe, bei denen die Fasern in den Kunststoff eingebettet sind. Als Fasern eignen sich die in der Kunststofftechnik für Verstärkungszwecke bekannten Fasern, wie Glasfasern und Mineralfasern. Für besondere Zwecke könnten auch Kohlefasern und Metallfasern vorgesehen sein. Weiterhin eignen sich auch synthetisch hergestellt Fasern. Besonders bevorzugt sind jedoch Naturfasern, insbesondere pflanzliche Naturfasern wie Baumwolle, Hanf und insbesondere Flachs. Die faserverstärkten Kunststoffe können in besonders geeigneter Weise hergestellt sein, indem Fasergemische aus Fasermaterial und thermoplastischen Fasern, gegebenenfalls nach vorherigem Vernadeln, unter Wärmeanwendung verdichtet werden, wobei ein inniger Verbund erhalten wird, bei dem die Verstärkungsfasern in den thermoplastischen Kunststoff eingebettet sind. Bei besonders geeigneten faserverstärkten Kanalwandungsteilen bzw. Einlegern liegt das Gewichtsverhältnis von thermoplastischem Kunststoff zu Verstärkungsfaser bei 40:60 bzw. 60:40 insbesondere bei ca. 50:50. In der Praxis haben sich als Kunststoff Polypopylen und als Verstärkungsfaser Flachs als besonders geeignet erwiesen.

Bei bevorzugten Ausführungsformen der Erfindung können in bzw. an der Fußbodenverkleidung mehrere voneinander getrennte Einleger vorgesehen sein. Diese können voneinander getrennte Kanäle aufweisen oder eine voneinander verschiedene Funktion ausüben. So ist bei einer bevorzugten Ausführungsform der Erfindung neben einem im Bodenbereich im wesentlichen horizontal vorgesehenen Einleger mit Kanalabschnitt noch ein zweiter davon getrennter plattenförmiger Einleger vorgesehen, der als Abdeckplatte für einen im Fußbereich der Karosserie vorgesehenen Raum dient, in dem beispielsweise Steuergeräte angeordnet sind. Damit entfällt eine gesonderte Abdeckungsplatte für diesen Raum.

Weiterhin ist es gemäß bevorzugten Ausführungsformen der Erfindung vorgesehen, daß der Einleger nicht nur einen Kanalabschnitt aufweist, sondern weitere Funktionen ausübt. So sind vorzugsweise mehrere Kanalabschnitte am Einleger vorgesehen, von denen insbesondere mindestens einer ein nach außen offener Abdeckkanal für im Bereich des Bodenbleches befestigte Leitungen, insbesondere für Kabel, ausgebildet ist. Durch solche Mehrfachfunktionen und entsprechend mehrfach profilierte Formgebung wird gleichzeitig die mechanische Stabilität des Einlegers erhöht. Weiterhin kann der Einleger mit Vorsteil Verstärkungsabschnitte aufweisen, die insbesondere zur Formstabilität von Teilen des textilen Dekors dienen an Stellen, an denen diese nicht hinterschäumt sind. Dies ist besonders günstig im Bereich des Einstiegs in Kraftfahrzeuge bei Ausführungen, bei denen das textile Dekor der Fußbodenverkleidung bis in Höhe der Einstiegsleiste reicht. Weiterhin kann es mit Vorteil vorgesehen sein, daß die zum textilen Dekor weisende Oberfläche des Einlegers Noppen oder sonstige Erhöhungen aufweist, die bis an die Unterseite des textilen Dekors reichen. Diese Erhöhungen können als Abstandhalter beim Verschäumen des Weichschaums und Verbinden von Weichschaum mit Dekor und Einleger dienen. Gleichzeitig haben diese Erhöhungen die Funktion einer Trittsicherheit beim Auftreten der Fahrgäste auf die Fußbodenverkleidung im Kraftfahrzeug. Mit dem den Kanalabschnitt aufweisenden Einleger können auch Polystyrolschaumkörper kombiniert sein, die insbesondere mit dem Einleger verbunden sind. Mit Vorteil ist weiterhin vorgesehen, daß die Kanalabschnitte an den Kanalöffnungen mit Steckverbindungen versehen sind, die eine problemlose Verbindung mit Anschlüssen von im Kraftfahrzeug vormontierten zuführenden und/oder ableitenden Kanälen ermöglichen. Die elastische Aufhängung der Einleger und damit der Kanalabschnitte im Weichschaum der Fußbodenverkleidung erleichtert dabei die Durchführung der Montage.

Die Erfindung betrifft nicht nur die Fußbodenverkleidung als Ganzes, sondern auch die einen Kanalabschnitt aufweisenden Einleger als solche. Dabei richtet sich die Erfindung insbesondere auf Einleger für Fußbodenverkleidungen von Fahrgasträumen in Kraftfahrzeugen in Form von mindestens zwei übereinander liegenden Platten, die an gemeinsamen Berührungsstellen miteinander verbunden sind, von denen mindestens eine Platte unter Bildung mindestens eines Kanalabschnittes, insbesondere eines Lüftungskanalabschnittes profiliert ist. Besonders bevorzugt ist ein Einleger, der mindestens zwei verschiedene Kanalfunktionen erfüllt, wobei neben mindestens einem Lüftungskanalabschnitt mindestens ein als Abdeckkanal für Leitungen dienender weiterer Abschnitt vorgesehen ist. Weiterhin kann der erfindungsgemäße Einleger Merkmale aufweisen, die für den Einleger oben im Zusammenhang mit der gesamten Fußbodenverkleidung beschrieben sind.

Weitere Merkmale und Einzelheiten der Erfindung ergeben sich aus der nachfolgenden Beschreibung von bevorzugten Ausführungsformen in Verbindung mit der Zeichnung und den Ansprüchen. Hierzu können die einzelnen Merkmale jeweils für sich alleine oder zu mehreren in Kombination bei Ausführungen der Erfindung verwirklicht sein.

In der Zeichnung zeigen
Figur 1 eine Ausführungsform eines erfindungsgemäßen Einlegers in perspektivischer Ansicht und
Figur 2 einen Schnitt durch eine Fußbodenverkleidung gemäß der Erfindung entlang der Linie A-A nach Figur 1.

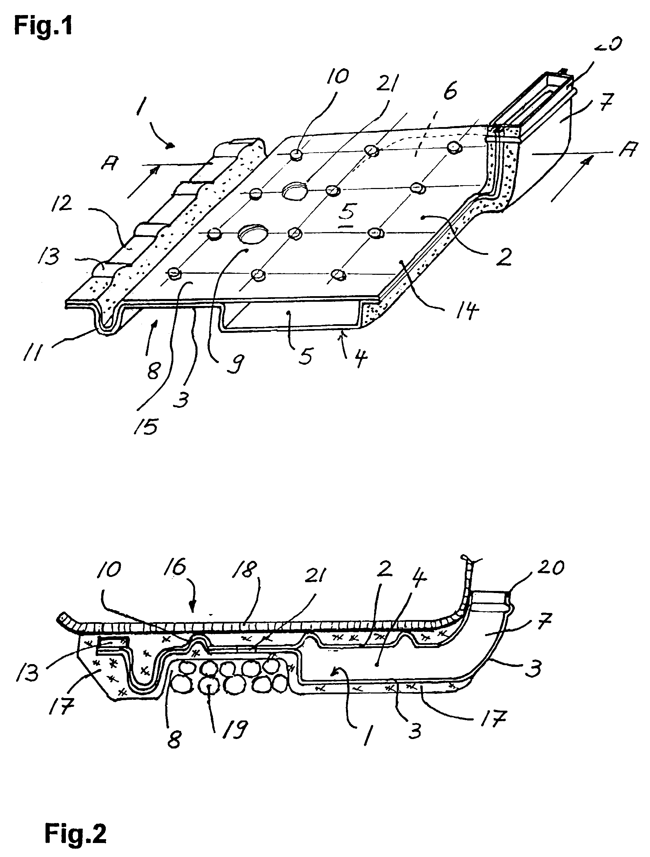

Der in Figur 1 dargestellte Einleger 1 für eine Fußbodenverkleidung ist als Blasteil aus einer oberen Platte 2 und einer unteren Platte 3 hergestellt. Die Platten bestehen aus Flachs-Polypropylen (Flachs PP) und sind erhalten durch Verdichten eines Nadelfilzes aus 50 Gewichtsteilen Polypropylenfasern und 50 Gewichtsteilen Flachsfasern in der Wärme bei Temperaturen im Bereich der Schmelztemperatur von Polypropylen (ca. 200 C°). Der Einleger 1 weist zwischen den beiden Platten 2 und 3 einen Lüftungskanalabschnitt 4 auf, der einen geradlinig verlaufenden Teil 5, einen gekrümmten Teil 6 und einen nach oben abgebogenen Teil 7 aufweist. Der Einleger 2 besitzt weiterhin noch einen Abdeckkanalabschnitt 8, der parallel zum geradlinigen Teil 5 des Lüftungskanals 4 verläuft und nach unten offen ist. Er dient zum Abdecken von elektrischen Leitungen, die am Bodenblech des Kraftfahrzeuges montiert sind. Der Lüftungskanalabschnitt 4 und der Abdeckkanalabschnitt 8 besitzen eine ineinandergehende Oberseite 9, aus der in Reihen angeordnete nach oben weisende Abstandsnoppen 10 herausragen. An dem vom Lüftungskanalabschnitt 4 abweisenden zur Abstützung nach unten dienenden Rand 11 des Abdeckkanalabschnittes 8 ist der Einleger zur Versteifung und Verstärkung der Fußbodenverkleidung U-förmig nach oben und flanschartig nach außen gebogen. Auf der Oberseite des Flansches 12 sind ebenfalls Abstandshalter 13 vorgesehen, die in diesem Fall nockenförmig ausgebildet sind.

Zur Herstellung des Einlegers 1 werden zwei auf Verformungstemperatur (180-220 °C insbesondere 190-200 °C) vorgewärmte Flachs-PP-Platten von zwei bis vier Millimetern Dicke unter Zwischenlage von zwei Polyethylenfolien zwischen zwei Teile einer Blasform eingelegt und nach Schließen der Form durch Einblasen von Luft zwischen die Polyethylenfolien in gewünschter Weise geformt. Dabei legen sich die Polyethylenfolien an die Innenflächen der Flachs-PP-Platten an und dienen an den gemeinsamen Berührungsflächen zwischen den Platten 2 und 3 als Schmelzkleber zur dichten Verbindung dieser Platten. Bei der Formgebung werden auch der nach oben abgebogene Teil 7 des Lüftungskanalabschnittes 4 sowie die Abstandhalter 10 bzw. 13 ausgebildet. Durch die in verschiedener Richtung erfolgte Verformung der beiden Platten 2 und 3 sowie aufgrund der flächigen Verbindung der beiden Platten im Bereich des Flansches 12, eines gegenüberliegenden Flansches 14 und im Bereich der doppelwandigen Oberseite 15 des Abdeckkanalabschnittes 8 ist der Einleger weitgehend verwindungssteif und in hohem Maße belastbar.

Figur 2 zeigt den Einleger 1 eingeschäumt in eine Fußbodenverkleidung 16. Ein elastischer Weichschaum 17 aus Polyurethan umgibt den Einleger 1 im wesentlichen vollständig mit Ausnahme des nach oben abgebogenen Teils 7 des Lüftungskanalabschnittes 4. Dadurch, daß der Einleger 1 sowohl an seiner Oberseite als auch an seiner Unterseite von Schaum 17 bedeckt ist, ist er in das Feder-Masse System der Fußbodenverkleidung integriert und nimmt an der Schalldämmung teil. An der Oberseite der Fußbodenverkleidung 16 ist ein Teppich 18 vorgesehen, der beim Umschäumen des Einlegers 1 mit angeschäumt ist. Dabei sorgen die Abstandsnoppen 10 und Abstandsnocken 12 als Abstandhalter für eine ausreichende Dicke der Schaumschicht zwischen Einleger 1 und Teppich 18. Durch die Einschäumung des Einlegers 1 ist auch die Innenseite des Abdeckkanalabschnittes 8 mit Schaum 17 ausgekleidet. Der Abdeckkanalabschnitt 8 dient zum Überdecken von am Bodenblech des Kraftfahrzeuges verlegten elektrischen Kabel 19. Durch die Weichschaumauskleidung der Innenseite des Abdeckkanalabschnittes werden die Kabel 19 weich eingebettet und schwingungsarm gehalten.

Der nach oben abgebogene Teil 7 des Lüftungskanalabschnittes 4 weist einen Steckanschluß 20 zum Einschieben in am Fahrzeug vorhandene weitere Kanalabschnitte auf. In entsprechender Weise ist die Öffnung am geradlinigen Teil 5 des Lüftungskanalabschnittes 4 zum Einstecken eines Steckanschlusses eines an entsprechender Stelle vorhandenen Kanalabschnittes ausgebildet. Im doppelwandigen Bereich 15, an dem die Platten 2 und 3 flächig miteinander verbunden sind, können Durchgangslöcher 21 zum Durchdringen des Schaumes beim Einschäumen, um den Schaum der Oberseite mit dem der Unterseite zu verbinden, und zur Gewichtseinsparung vorgesehen sein. Aufgrund der thermischen und mechanischen Stabilität von Flachs-PP hält der Einleger 1 die Umschäumungsdrücke und Temperaturen problemlos aus.

Der Schaum 17 und der Teppich 18 erstrecken sich im Fußbereich der Fußbodenverkleidung über den Einleger hinaus. Falls gewünscht kann in diesem Bereich eine Platte aus Flachs-PP als Einleger in den Schaum 17 eingeschäumt oder an diesen angeschäumt sein, wobei die Platte zum Abdecken von Hohlräumen im Bodenblech bzw. Fußbereichblech dient, in denen Steuergeräte oder sonstige Bauteile montiert sind und die im Bedarfsfalle zugänglich sein müssen.

Wenn die Fußbodenverkleidung auch seitlich über den Einleger 1 hinausragt, können im Bereich der Seitenflansche 12 bzw. 14 zusätzliche Polystyrolschaumkörper vorgesehen und gegebenenfalls an den Flanschen befestigt sein. Ebenfalls können in dem in den Fußraum überragenden Teil der Fußbodenverkleidung zusätzlich noch Polystyrolschaumkörper in den Schaum 17 eingebettet sein.

## Patentansprüche

1. Fußbodenverkleidung (16) für den Fahrgastraum von Kraftfahrzeugen mit mindestens einem der Form der Innenseite des Fahrzeugbodens sowie daran befestigten Teilen angepaßten volumenbildenden Formkörper (17) aus elastischem Weichschaum und einem die Oberseite des Formkörpers abdeckenden textilen Dekor (18), dadurch gekennzeichnet, daß mit dem Formkörper (17) aus Weichschaum mindestens ein mindestens einen Kanalabschnitt (4, 8) aufweisender Einleger (1) verbunden ist.

2. Fußbodenverkleidung nach Anspruch 1, dadurch gekennzeichnet, daß der Kanalabschnitt (4) ein solcher eines Lüftungskanals ist.

3. Fußbodenverkleidung nach Anspruch 1 oder 2, dadurch gekennzeichnet, daß der Kanalabschnitt (8) ein solcher eines Leitungskanals ist, insbesondere eines Leitungskanals zum Überdecken von vormontierten Leitungen (19).

4. Fußbodenverkleidung nach einem der vorhergehenden Ansprüche, dadurch gekennzeichnet, daß der Einleger (1) durch Anschäumen des Weichschaums (17) mit der Fußbodenverkleidung (1) verbunden, insbesondere in diesen eingeschäumt ist.

5. Fußbodenverkleidung nach einem der vorhergehenden Ansprüche, dadurch gekennzeichnet, daß der Einleger (1) vom Weichschaum (17) mindestens an seiner Ober- und Unterseite umschäumt ist.

6. Fußbodenverkleidung nach einem der vorhergehenden Ansprüche, dadurch gekennzeichnet, daß der Einleger (1) steif ausgebildet ist und mit dem Gewicht einer Person belastbar ist.

7. Fußbodenverkleidung nach einem der vorhergehenden Ansprüche, dadurch gekennzeichnet, daß der Kanalabschnitt von mindestens zwei aufeinander liegenden Kanalwandungsteilen (2, 3) gebildet wird, von denen mindestens einer ein kanalförmiges Profil aufweist.

8. Fußbodenverkleidung nach einem der vorhergehenden Ansprüche, dadurch gekennzeichnet, daß der Kanalabschnitt von mindestens drei aufeinander liegenden Kanalwandungsteilen gebildet wird, von denen mindestens zwei ein kanalförmiges Profil aufweisen.

9. Fußbodenverkleidung nach Anspruch 7 oder 8, dadurch gekennzeichnet, daß die Kanalwandungsteile entlang gemeinsamer, vorzugsweise flanschartiger Ränder (12, 14) und gegebenenfalls an weiteren einander berührenden Bezirken (15) bleibend miteinander verbunden sind.

10. Fußbodenverkleidung nach einem der Ansprüche 7 bis 9, dadurch gekennzeichnet, daß die Kanalwandungsteile (2, 3) mindestens so dicht miteinander verbunden sind, daß in das Kanalinnere beim Umschäumen kein Schaum einzudringen vermag.

11. Fußbodenverkleidung nach einem der Ansprüche 7 bis 10, dadurch gekennzeichnet, daß die Kanalwandungsteile (2, 3) mit Hilfe eines Klebemittels, insbesondere eines thermoplastischen Klebemittels, miteinander verbunden sind.

12. Fußbodenverkleidung nach Anspruch 11, dadurch gekennzeichnet, daß als Klebemittel mindestens eine, vorzugsweise mindestens zwei, zwischen die Kanalwandungsteile eingelegte Schmelzkleberfolien, insbesondere aus Polyethylen, vorgesehen sind, die vorzugsweise auch die Kanalinnenwandung auskleiden.

13. Fußbodenverkleidung nach einem der vorhergehenden Ansprüche, dadurch gekennzeichnet, daß der Kanalabschnitt (4, 8) aus einem faserverstärkten, insbesondere thermoplastischen, Kunststoff besteht.

14. Fußbodenverkleidung nach einem der vorhergehenden Ansprüche, dadurch gekennzeichnet, daß der Kanalabschnitt (4, 8) auf seiner Außenseite eine fasrige Struktur aufweist.

15. Fußbodenverkleidung nach einem der vorhergehenden Ansprüche, dadurch gekennzeichnet, daß der Kanalabschnitt (4, 8), insbesondere die Kanalwandungsteile (2, 3), von verdichteten Faserplatten gebildet werden.

16. Fußbodenverkleidung nach Anspruch 15, dadurch gekennzeichnet, daß die Faserplatten (2, 3) mit pflanzlichen Fasern verstärkte Polypropylenplatten sind, die vorzugsweise aus einem verdichteten Gemisch aus Pflanzenfasern und Polypropylenfasern gebildet sind.

17. Fußbodenverkleidung nach einem der vorhergehenden Ansprüche, dadurch gekennzeichnet, daß sie außer dem mindestens einen den Kanalabschnitt aufweisenden Einleger noch mindestens einen weiteren Einleger aufweist, der vorzugsweise aus dem gleichen Material besteht, wie der den Kanalabschnitt aufweisenden Einleger.

18. Fußbodenverkleidung nach Anspruch 14, dadurch gekennzeichnet, daß ein Einleger (1) einen nach außen, insbesondere nach unten, offenen tunnelförmigen Kanalabschnitt (8) zum Überdecken von an der Fahrzeuginnenseite verlaufenden Leitungen (19), insbesondere Kabeln, aufweist.

19. Fußbodenverkleidung nach Anspruch 18, dadurch gekennzeichnet, daß ein Einleger (1) sowohl mindestens einen Kanalabschnitt (4) für die Lüftung als auch mindestens einen Kanalabschnitt (8) für Leitungen aufweist.

20. Fußbodenverkleidung nach einem der Ansprüche 3 bis 19, dadurch gekennzeichnet, daß der Lüftungskanalabschnitt (4) und der Leitungskanalabschnitt (8) einstückig ausgebildet sind, insbesondere aus den selben Kanalwandungsteilen (2, 3) bestehen.

21. Fußbodenverkleidung nach einem der Ansprüche 17 bis 22, dadurch gekennzeichnet, daß als weiterer Einleger eine plattenförmige Abdeckung für im Fußbereich des Fahrgastraums vorgesehene Hohlräume in der Karosserie vorgesehen ist.

22. Fußbodenverkleidung nach einem der vorhergehenden Ansprüche, dadurch gekennzeichnet, daß der mindestens eine den Kanalabschnitt (4, 8) aufweisende Einleger (1) und vorzugsweise auch weitere Einleger zum textilen Dekormaterial (18) gerichtete, vorzugsweise noppenförmige, Abstandhalter (10, 13) aufweist, die die Unterseite des textilen Dekors (18) im wesentlichen berühren.

23. Fußbodenverkleidung nach einem der vorhergehenden Ansprüche, dadurch gekennzeichnet, daß mindestens ein Kanalende, vorzugsweise beide Kanalenden, des Kanalabschnittes Steckverbindungen (20) zum Anschluß an Kanalmündungen von zuleitenden und/oder weiterleitenden Kanalabschnitten des Fahrzeuges aufweisen.

24. Einleger (1) für Fußbodenverkleidungen von Fahrgasträumen in Kraftfahrzeugen, insbesondere nach einem der vorhergehenden Ansprüche, in Form von mindestens zwei übereinander liegenden Platten (2, 3), die an gemeinsamen Berührungsstellen (12, 14, 15) miteinander verbunden sind und von denen mindestens eine Platte (3) unter Bildung mindestens eines Kanalabschnittes (4), insbesondere eines Lüftungskanalabschnittes, profiliert ist.

25. Einleger nach Anspruch 24, dadurch gekennzeichnet, daß er zur Übernahme von mindestens zwei Funktionen ausgebildet ist, vorzugsweise neben mindestens einem Lüftungskanalabschnitt (4) und mindestens einen als Abdeckkanal für Leitungen dienenden Abschnitt (8) aufweist.
